# EUROPEAN PATENT SPECIFICATION

(11) **EP 1 269 404 B1**
(45) Date of publication and mention of the grant of the patent: **13.05.2009**
(21) Application number: 01918040.5
(22) Date of filing: 21.03.2001
(51) Int. Cl.: G06K 19/06, G06F 3/033

(54) **METHOD AND SYSTEM FOR STORING A CODING PATTERN**
VERFAHREN UND SYSTEM ZUM SPEICHERN EINES CODIERUNGSMUSTERS
PROCEDE ET SYSTEME DE STOCKAGE D'UN MOTIF DE CODAGE

(30) Priority: 21.03.2000 SE 0000947
(43) Date of publication of application: 02.01.2003
(73) Proprietor: Anoto AB, 223 69 Lund (SE)
(72) Inventor: HUGOSSON, Ola, S-223 50 Lund (SE); ERICSON, Petter, S-212 14 Malmö (SE)
(86) International application number: PCT/SE2001/000596
(87) International publication number: WO 2001/071653

(56) References cited:
- WO-A1-92/17859
- US-A- 5 661 506

## Description

### Field of the Invention

The present invention relates to a method for storage of information or data and a device adapted to read data stored by means of the method.

### Background Art

There is a plurality of known methods for storage of data. The traditional technique of storing written information is to store text in printed products such as books and newspapers. There are, however, several drawbacks of storing text in book form. One of the drawbacks is that books require much space. To achieve storage requiring less space, documents have for a long time been stored on microfiche. For a high degree of compaction, it is, however, necessary to use photographic films for such storage since ordinary paper has a strictly limited packing density. The storage alternatives to books which are advancing most rapidly are those based on the use of computers. A plurality of storage media for digital information is available. Examples of such storage media are RAM, magnetic media and optical media, such as optical discs. Another technique of storing information that can be read optically is bar codes which are used to a great extent in the retailing of everyday commodities when prices are included.

It is in some cases desirable to distribute text stored in a compact fashion. A drawback of using computers in such cases is that the user must then be electronically connected with the distributor of the stored information. An alternative is distributing microfiche or magnetic or optical data storage media containing the information that is to be distributed. However, it is relatively expensive to distribute data storage media or microfiche to a large group of people.

There is thus a need for an alternative method for compact storage of data and an alternative device for recording data stored by means of the method.

WO92/17859 discloses a method of coding positions on a surface by means of pseudo-random sequences. US5661506 discloses another method of coding positions on a surface.

### Summary of the Invention

An object of the present invention is to provide a method for compact storage of non-sequential data.

A further object of the present invention is to provide a method for compact storage of written text which allows easy distribution to a plurality of users without using electronic transmission.

One more object of the present invention is to provide a method for storage of a command which controls a computer.

Another object of the present invention is to provide a device for recording of information which has been stored by means of the method according to the present invention.

These and other objects are achieved by a method according to claim 1 and a user unit according to claim 11.

A basic idea of the present invention is to store text and other data by means of a matrix with symbols, which matrix can be recorded optically.

In this context, the term "product" relates to all possible articles on which a coding pattern can be applied. In the first place, sheets of paper in newspapers, books as well as loose sheets of paper are intended, but also other articles, such as bulletin boards, can be provided with a coding pattern.

Data relates to information such as text or other information. Data also relates to, for example, a command to a computer. This type of information is usually non-periodic.

The term non-sequential defines that the data is arbitrary in the sense that it is not a sequence of numbers in one or more dimensions. Such a sequence may easily be stored as a mathematical expression.

The product can be an arbitrary product on which one wants to have coded information. By coding the information by means of a symbol sequence which has the characteristic that an arbitrary subsequence of a predetermined length of the symbol sequence unambiguously defines the position of the subsequence in the symbol sequence, a code is made possible, which is relatively insensitive to how it is read by a user unit. At the same time, compact storage of the information is permitted. As mentioned above, the document may consist of any document whatever.

According to a preferred embodiment, the matrix is reproduced on a page in a book, the string of text being the text on the page of the book. It will thus be possible for a user to optically record the contents of the entire page of the book by recording the matrix with symbols.

Preferably, the pattern being arranged in such manner that it comprises portions of said at lest one sequence in a coding pattern, said portions being of at least the same magnitude as the subsequences of a predetermined magnitude, so that each of the data values codes a group each of at least two sequence portions in the coding pattern.

By coding the data in such manner that groups of at least two sequence portions are required for each data value, the coding pattern will be such that an arbitrary part of one sequence portion and the corresponding part of another sequence portion define a data value.

It is also advantageous that only two sequence portions are required to code a data value since the coding pattern can then be made more compact.

The sequence portions are preferably juxtaposed in a matrix so that each of the data values is defined by the difference between the sequence values for two adjoining subsequences from corresponding parts of the sequence portions in the matrix. As a result, a user unit can easily convert the matrix and its subsequences with symbols into subsequences with values. It is possible for a user unit to convert the subsequences with values into data values. Since the data values are defined by difference values, the data values will be independent of which parts of the sequence portions are recorded.

It is, of course, possible to arrange the sequence portions in a way other than in a matrix. However, it facilitates the recording of the sequence portions that they are arranged in a matrix.

The sequence portions also code at least part of a position value which defines the serial number of the sequence portion. This means that it is not necessary to record the entire coding pattern on the same occasion since the order of the different parts can be obtained from the position value. This facilitates recording of the matrix since a user unit which records the matrix can then decide whether sequence portions have already been recorded previously. In the case of missing certain sequences in connection with the recording when a user unit is scanned across the coding pattern, it will thus be possible to record the missed sequences on a later occasion and place them in the correct position by means of the position values. The position values are also of assistance when checking that no sequence has been missed.

Advantageously, part of a difference value defines part of a position sequence, which is arranged in such manner that an arbitrary position sequence part of a predetermined magnitude unambiguously defines the position of the position sequence part in the position sequence.

Even if the data can be arbitrary data, it is preferably characters which are converted into data values. Alternatively, the data consists of, for example, a command to a computer.

The conversion of the characters into data values can be carried out in several ways. Advantageously, the text is first compressed by means of some prior art compressing method so that the data that is to be coded is minimised. Then each character in the coded data is converted into data values.

Preferably, the matrix is arranged in such manner as to comprise only columns with sequences which define sequence values. As a result, the matrix will be as compact as possible. It goes without saying that it is possible to arrange the matrix so as to comprise also other information.

According to a less preferred embodiment, the matrix also comprises other sequences with symbols. These can serve as delimitation between the sequences which define sequence values. However, the matrix will be less compact than in the case where the preferred embodiment is used.

The symbols of the symbol sequence can have many different kinds of appearance. According to an embodiment, the symbols consist of markings, the size of the markings defining the value of the symbol.

According to an alternative embodiment, each of the symbols comprises a raster point and a marking, the value of each symbol being indicated by the position of said marking in relation to the raster point.

The user unit may comprise a memory intended for storage of data which corresponds to the data value. Data stored in the memory can then be transmitted to some other unit, such as a computer.

Instead of, or together with, a memory, the user unit may comprise a display and can be adapted to show on the display data which corresponds to the data value.

The user unit can be equipped with a loudspeaker via which the user unit is adapted to transmit sound corresponding to the data.

A user unit may be adapted to convert the predetermined number of subsequences into data values and to convert each data value into only one character. This means that the memory can be small since a reference table which is stored in the memory need only contain connections between the number of characters used and their corresponding symbols.

Alternatively, a user unit may be adapted to convert each data value into one or more characters. Thus, the data values are converted into entire words, word parts or endings. A matrix which is made up in this manner will, of course, be more compact than if each character has its own data value. A drawback is, however, that a larger memory is necessary in the user unit. Besides, that part of the matrix which need be recorded for a word to be defined must be larger than if each character has its own data value.

Of course, the user unit is adapted to convert the coding pattern in dependence on how it is created.

Thus the coding pattern is converted in reverse order to how it has been stored.

The conversion of the subsequences with symbols into data values is preferably made by converting the symbols into values, converting the subsequences with values into sequence values, calculating the differences between the sequence values and converting the differences into data values.

The user unit is adapted to use part of the difference between the sequence values for determining the relative positions of the subsequences. Since more than one image is recorded in the inputting of a matrix, there is a risk that certain parts of the matrix are recorded in more than one image. By the user unit using part of the difference to determine the relative positions of the sequence parts, it is possible to exclude such information as corresponds to sequence parts that have already been recorded.

Since the conversion between data and data values is carried out by means of a predetermined relationship, the user unit must have information about how the data was converted into data values when the matrix was formed.

A memory medium may be read by a computer and has a program stored thereon. The program may make a computer record an input signal corresponding to an image, and, in response to the fact that the image comprises a predetermined number of subsequences with symbols, each of the subsequences unambiguously corresponding to a position in a predetermined sequence which is arranged in such manner that an arbitrary subsequence of a predetermined magnitude unambiguously defines a position in the sequence, convert the predetermined number of subsequences into data.

Such a program can be executed in an arbitrary computer but is advantageously executed in a reading pen which comprises the necessary hardware for recording images.

If the coding pattern is printed by a carbon-based black ink absorbing infrared light and the printed text is printed with an ink which is not carbon-based and does not absorb infrared, the coding pattern may be sensed by an infrared sensor, without interference by the printed text.

The above features can, of course, be combined in the same embodiment.

With a view to further elucidating the invention, detailed embodiments thereof will be described below, without the invention however being considered to be restricted thereto.

The accompanying drawings are only schematic and, thus, certain dimensions are greatly exaggerated so as to illustrate the invention more distinctly.

### Brief Description of the Drawings

Fig. 1 shows a document in the form of a page in a book with a coding pattern according to a preferred embodiment of the present invention.
Fig. 2 illustrates in more detail the coding pattern in Fig. 1.
Fig. 3 illustrates a sequence which can be used to code data according to the present invention.
Fig. 4 shows an embodiment of symbols which can be used in the coding pattern in Figs 1 and 2.
Fig. 5 shows how part of the coding pattern is converted into characters.
Fig. 6 shows a user unit according to a preferred embodiment of the invention.
Fig. 7 shows the conversion of a matrix into data values and a position value.
Fig. 8 shows the conversion of the coding pattern into sequence values.
Fig. 9 shows how part of an alternative embodiment of a coding pattern is converted into data values.

### Detailed Description of the Invention

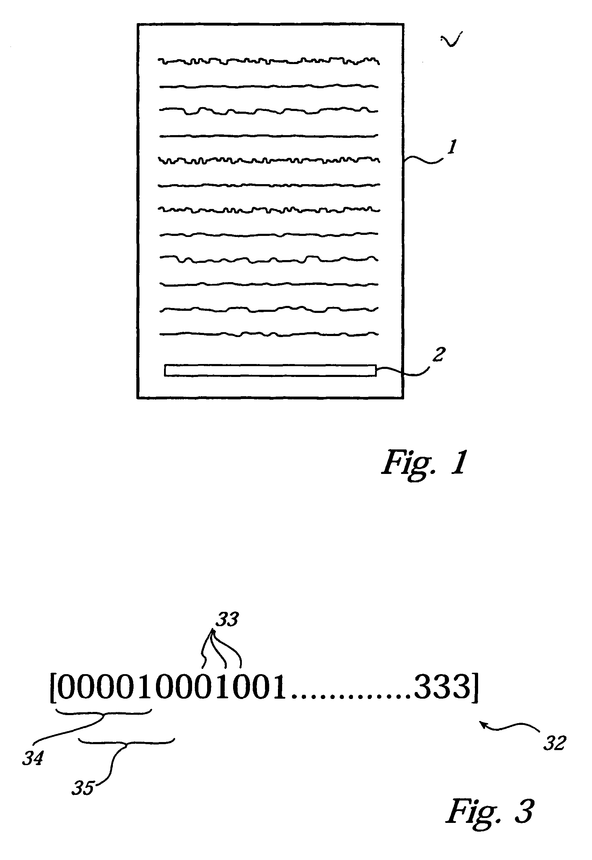

Fig. 1 shows a document 1 with a coding pattern according to a preferred embodiment of the present invention. The coding pattern consists of a matrix whose outer boundary 2 is marked with the frame 2.

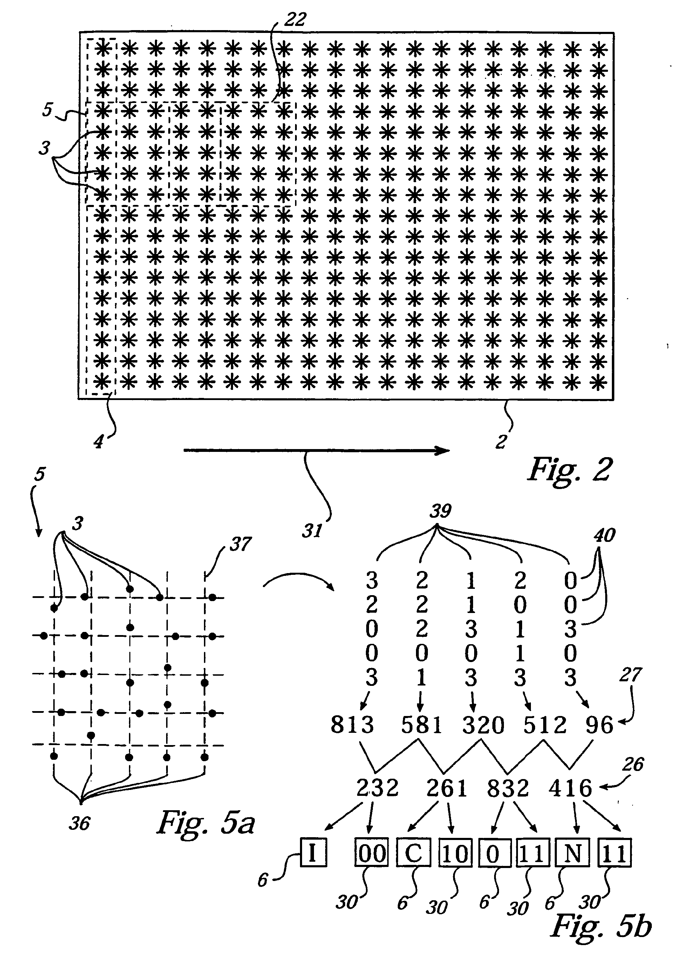

Fig. 2 shows in more detail the coding pattern 2. The matrix comprises a plurality of symbols 3 arranged in sequence portions 4 in columns in the matrix, each symbol 3 defining the value "0", "1", "2", or "3". Each column with symbols is a sequence portion of a sequence with 512 symbols. An arbitrary subsequence, which consists of five symbols, defines unambiguously the position of the subsequence in the sequence. The sequences in the different columns are displaced in relation to each other. Fig. 1 also shows a marking 31 which indicates in which direction the matrix is to be recorded for the string of characters to be recorded. In Fig. 2, all symbols are marked with identical symbols. However, the symbols are of course different dependent on which value they represent.

Fig. 3 illustrates the appearance of a sequence 32 which is used in the invention. The sequence 32 comprises 512 values 33, each of which is either "0", "1", "2", or "3". An arbitrary subsequence 34, 35 with 5 values defines unambiguously a sequence value which corresponds to the position of the subsequence in the sequence 32. Each subsequence appears only once in the sequence. Thus, the first subsequence 34 corresponds to the value "0" and the second subsequence 35 to the value "1". In Fig. 2, the columns consist of sequence portions of such sequences in which the values have been converted into symbols. Sequences of this kind are described in "Pseudo-Random Sequences and Arrays" by F. Jessie MacWilliams and Neil J. A. Sloane in "Proceedings of the IEEE Vol. 64, No. 12, December 1976".

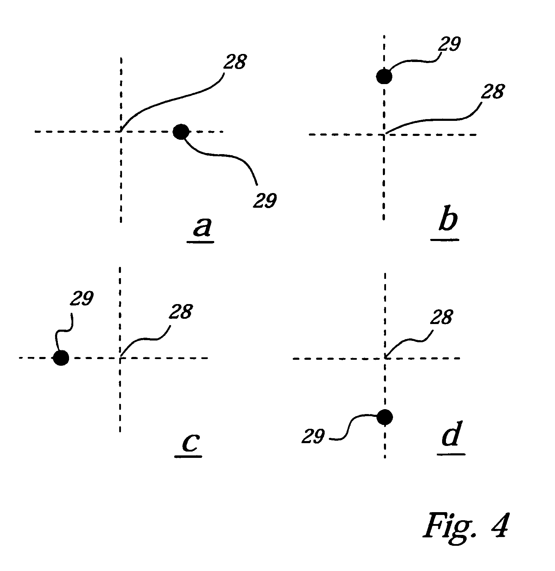

Figs 4a-d show an embodiment of a symbol which can be used in the matrix in Fig. 1 according to the invention. The symbol comprises a virtual raster point 28 which is represented by the intersection between the raster lines, and a marking 29 which is in the form of a point. The value of the symbol depends on where the marking is located. In the Example in Fig. 4, there are four possible locations, one on each of the raster lines extending from the raster points. The displacement from the raster points is the same for all values. The symbol has in Fig. 4a the value "0", in Fig. 4b the value "1", in Fig. 4c the value "2" and in Fig. 4d the value "3". In other words, there are four different types of symbols. Each symbol can thus represent four values "0-3".

Fig. 5 shows a part 5a of the matrix 2 in Fig. 1 in greater detail. The submatrix 5 contains five subsequences 36 arranged in columns in the submatrix. Fig. 5a also shows the virtual raster 37 in relation to which the symbols are arranged. Fig. 5 b shows the matrix when the symbols have been converted into values.

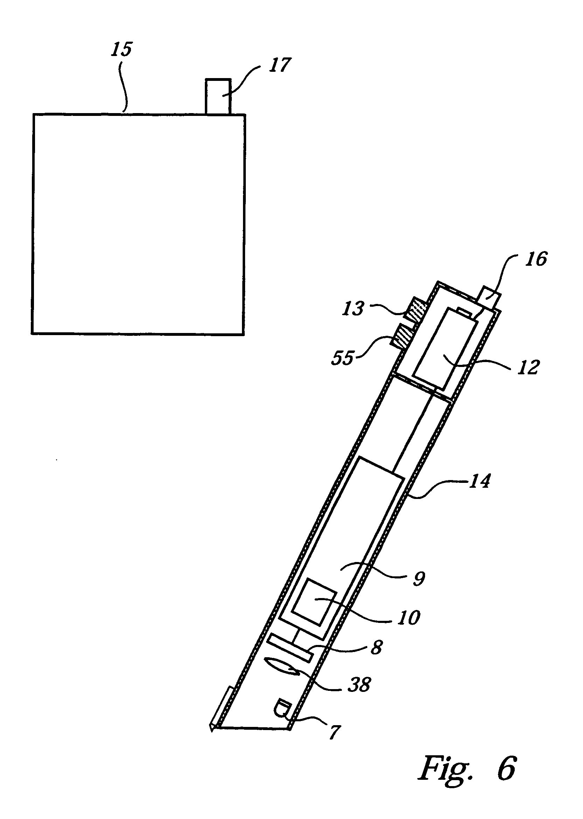

Fig. 6 shows a user unit according to a preferred embodiment of the present invention. The user unit is a reading pen 14 which is arranged for recording a coding pattern as shown in Fig. 2. The reading pen is intended to be held by the user's hand to record images from a base. The reading pen comprises a light-emitting diode 7 for illuminating the surface which is to be recorded, an image sensor 8 in the form of a CCD for recording of images, an image processing means 9 and a memory 10. In front of the CCD there is arranged a lens system 38 which is intended for imaging of the coding pattern on the CCD. The reading pen 14 further comprises a battery 12 for power supply and buttons 13 by means of which the reading pen is switched on. The reading pen is provided with a transmitter 16 for transmitting recorded information to a computer 15, which in turn is provided with a receiver 17 for receiving information from the reading pen. The transmitter and the receiver communicate, for example, by IR or by radiowaves. The information recorded by means of the reading pen can, consequently, easily be transmitted to the computer for further processing. The reading pen is also provided with a display 21 for presentation of the information recorded by means of the reading pen 14. The reading pen 14 is also provided with a loudspeaker 55 to transmit sound corresponding to the data.

With reference to Figs 2, 5 and 6, the recording of a coding pattern will now be described. When the reading pen is passed across the matrix 2 with symbols 3, an area is recorded, which at least comprises a first area 5 comprising a submatrix of the size five times five symbols 3. The symbols are one of the four different symbols shown in Fig. 4. The image processing means 9 converts the recorded image into a matrix with five times five symbols. Then the reading pen converts the subsequences 36 in the matrix into subsequences 39 with values 40. Each subsequence with values correspond to a sequence value 27 which corresponds to the position in a sequence with 512 values, each of which is either "0", "1", "2" or "3". If an image is recorded which is displaced one row in the matrix, sequence values are obtained, which correspond to the next position in the sequence. The user unit converts the subsequences 39 into sequence values 27. Then the user unit calculates data values 26 as the difference modulo 1024 between the sequence values 27 for adjoining columns. By the sequence values 27 increasing to the same extent for each column if the recorded image is displaced in the direction of the column, the data values, which equal the difference between the sequence values 27, are independent of the height at which the image is recorded. The data values are then converted into binary form and the eight least significant bits in each data value are converted into characters 6 which are stored in the memory 10, while the two most significant bits from four adjoining data values are converted into a position sequence part. Thus it is possible to code a total of 256 different characters. The position sequence part constitutes part of a position sequence similar to the sequence in Fig. 3 and defines unambiguously a position in the position sequence and constitutes a position value for the columns.

In Fig. 5, the characters 6 are characters in a text. However, it is preferred for the characters 6 to be characters in a compressed text so that the string of characters which consists of the characters 6 need be converted so as to obtain text en clair.

The position values for the columns are used to determine whether a character from a subsequently recorded image has already been stored in the string of characters in the memory. This is usable since the next image which is recorded comprises, for example, a second area 22 which comprises parts of the first area 5. When the subsequences in the second area 22 are converted into characters, the characters will partly be the same as those recorded when the first area 5 was recorded. By the position value being given by the difference values, the previously stored characters can be dropped. A coding pattern codes, for example, the series [(0, 12), (1, 25), (2, 37), (3, 82), (4, 24), (5, 16)] in which the first value in each pair of values corresponds to a position value and the second value corresponds to a data value. In a first image, the series [(0, 12), (1, 25), (2, 37), (3, 82)] is recorded. In a second image, the series [(2, 37), (3, 82) (4, 24), (5, 16)] is recorded. Thus, the values "37" and "82" are recorded twice. The position values indicate, however, that they have been recorded even the first time, which makes it possible to produce the correct series once more.

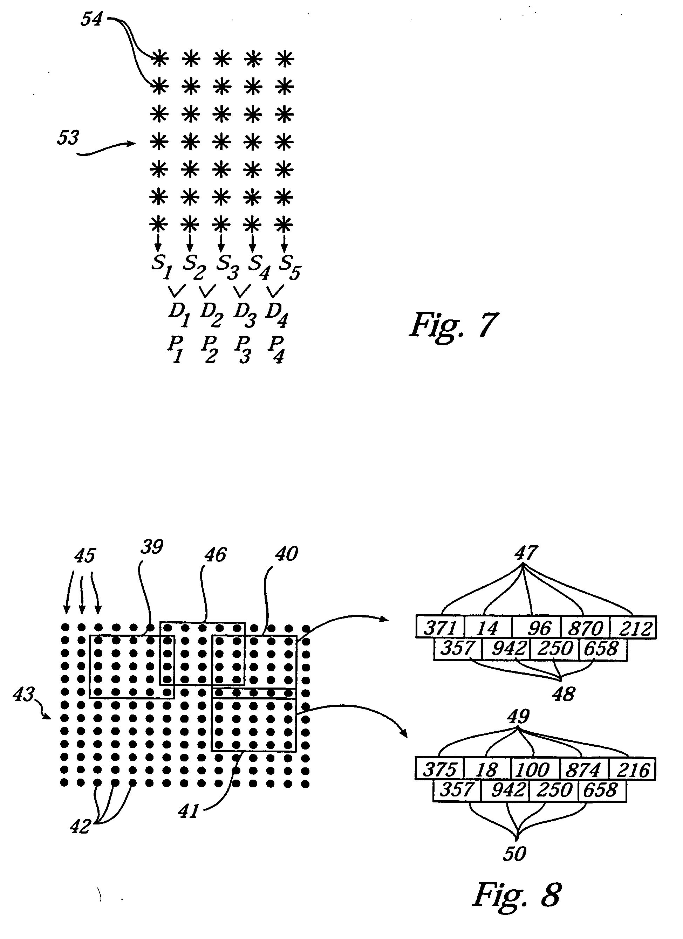

A further example of when the positions of the subsequences are important is when the reading pen is quickly passed across the coding pattern. Then there is a risk that some information is not recorded. By having a position code in subsequences, it will be possible to pass the reading pen across the coding pattern once more, thereby recording the information that was not recorded the first time. This is illustrated in Fig. 7. Fig. 7 shows a small part 43 of a coding pattern in the form of a plurality of symbols 42 arranged in columns 45 in a matrix. It is thus sufficient to record a subsequence consisting of five symbols of each column 45. When the reading pen is passed across the coding pattern, several images are recorded. A first image 39 and a second image 40, which are recorded by the reading pen, are separated. Since some of the symbols in the pattern have not been recorded in an image, some information is missing. It is then possible to pass the reading pen across the coding pattern a second time to record a third image 46 which contains information from the columns that were missing in the first image 39 and in the second image 40. By the subsequences containing position information, it is possible to enter the information from the third image 46 in the correct position in relation to the information from the first image 39 and second image 40. A coding pattern codes, for example, the series [(0, 12), (1, 25), (2, 37), (3, 82) (4, 24), (5, 16)], where the first value in each pair of values indicates the position value and the second value indicates the data value. In a first recording, the series [(0, 12), (1, 25), (2, 37), (4, 24), (5, 16)] is recorded. In a second recording, the series [(0, 12), (1, 25), (2, 37), (3, 82) (4, 24)] is recorded. Since the data value "82" which corresponds to the position value "3" is included in the second series, the complete series can be produced.

According to a preferred embodiment, each difference value codes only part of a position value. This is illustrated in Fig. 7. The matrix 53 with symbols 54 is converted into sequence values S₁-S₅ in the same manner as described above. The difference between the sequence values forms a set of data values D₁-D₄ and a set of sub-position values P₁-P₄ which together form a sequence defining a position value which indicates the position of the matrix in the coding pattern.

Fig. 8 also illustrates how the information from images, which have been recorded at different heights in the matrix, is processed. The first image 40 contains five times five symbols. The symbols are converted into values as described in connection with Fig. 5. The values in the columns are then converted into sequence values which correspond to the position of the subsequence in the sequence. The five subsequences with symbols which correspond to the columns in the first image 40 are thus converted into a first set of five sequence values 47. The first set of five sequence values 47 is then converted into a first set of difference values 48, which in turn are converted into characters in the same way as described in connection with Fig. 5. When a third image 41 containing five times five symbols is recorded, the five subsequences consisting of five symbols are converted into a second set of five sequence values 49. The second set of five sequence values 49 is then converted into a second set of difference values 50 which in turn are converted into characters in the same way as described in connection with Fig. 5. Each of the sequence values 49 in the second set is four units greater than the sequence values 47 in the first set since they are fetched further down in the sequences of which the sequence parts consist a part. However, each of the difference values 48 in the first set of difference values is equal to the corresponding difference value in the second set of difference values. Thus, the difference values are independent of at what height in the matrix 43 the images have been recorded.

When producing the matrix in Fig. 5, each character 6 in a string of characters is first converted into data values by means of a reference table which is stored in the memory. The data values consist of eight bits. Difference values 26 are then produced by adding position information in the form of two binary bits to the data values. The position information 30 is selected in such manner that four successive difference values 26, 48, 50 give a position subsequence which unambiguously defines a position value which gives a position subsequence which unambiguously determines a position in a position sequence. Parts of identical sequences are then arranged in columns in the matrix. The identical sequences are such that a subsequence with five successive values from the sequence unambiguously determines a sequence value 27 which corresponds to the position of the subsequence in the sequence. The parts of the sequences are arranged in such manner that the set of differences between the sequence values for the sequence parts, which have been taken from the same rows in the matrix, corresponds to the difference values 27. Subsequently the values 40 in the sequences are converted into symbols 3.

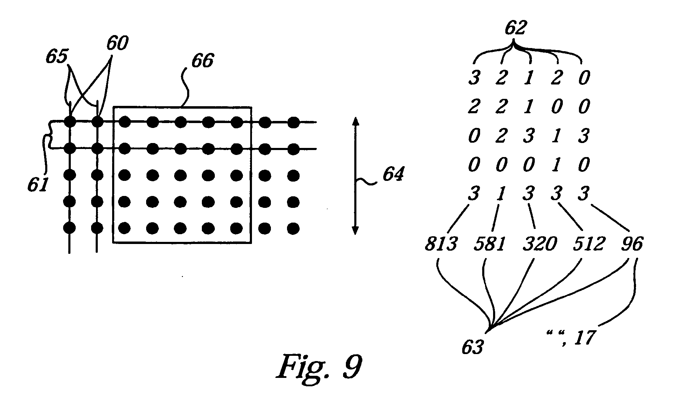

In fig 9 another embodiment of a coding pattern is shown in which the entire coding pattern has a height 64 corresponding to the length of a subsequence, i.e. five symbols 60 in this case. The coding pattern is of a similar type as described in connection with fig. 5, i.e. the value of a symbol depends on the position of a marking 60 in relation to a virtual raster with raster lines 65. The distance 61 between different raster lines 65 is 0.3 mm in this embodiment. With this distance between the raster points the coding pattern becomes considerably robust while at the same time being compact. The symbols in the square 66 are converted into subsequences 62 as described in connection with fig 5. The subsequences are in turn converted into sequence values 63. According to this embodiment each sequence value correspond to a character and a position code. The sequence value "96" corresponds for example to the character " " (space) and the position code "17". According to this embodiment of the invention the reading pen thus has to record all symbols in the height of the coding pattern in order to be able to convert into text. An advantage of this embodiment is that each character may be recorded by recording only one column of symbols.

In a preferred embodiment, 6*6 symbols are used for coding the pattern. A more detailed explanation of how the coding is done appears from Applicant's PCT patent applications Nos. WO 00/73983, PCT/SE00/1667 (EP 1214641) and WO 01/16691.

The above embodiments are to be considered examples only.

A person skilled in the art realises that the above embodiments can be varied in a number of ways without departing from the inventive idea. For example, it is not necessary that the user unit be a single integrated unit.

It is not necessary for the invention that a display be arranged directly on the user unit.

Although the examples above only illustrate that the sequence portions are arranged in columns in a matrix, this is not necessary for the invention. The sequence portions can be arranged in an arbitrary manner.

It goes without saying that the sequences that are used to code the data need not be 512 character long.

Of course any number of symbols may be used to code a value.

## Claims

1. A method for storage of non-sequential data, comprising the step of coding the data by means of a series of subsequences (34, 35, 36, 39) of at least one symbol sequence (32) which has the characteristic that an arbitrary subsequence (34, 35, 36, 39) of a predetermined length of the symbol sequence (32) unambiguously defines the position of the subsequence (34, 35, 36, 39) in the symbol sequence (32), and reproducing a coding pattern (2) on a product, which coding pattern comprises said series of subsequences (34, 35, 36, 39), **characterised in that** the coding comprises the steps of converting the data to be coded to a plurality of data values (6), adding at least a part of a position value (30) to each data value (6) to obtain a plurality of data-position values (26), coding each data-position value (26) as the difference between the positions in the symbol sequence (32) of two juxtaposed subsequences in said series of subsequences (34, 35, 36, 39), wherein the position values (30) define the order of said subsequences in said series of subsequences (34, 35, 36, 39).

2. A method as claimed in claim 1,
**characterised in that** the position values form a position sequence which has the characteristic that an arbitrary position subsequence of a predetermined length of the position sequence unambiguously defines the position of the position subsequence in said series of subsequences.

3. A method as claimed in claim 1 or 2,
**characterised in that** the coding pattern comprises a series of portions of the symbol sequences which are longer than said subsequences.

4. A method as claimed in any one of the preceding claims, **characterised in that** said coding pattern is reproduced as a matrix, in which said subsequences constitute columns of the matrix.

5. A method as claimed in any one of the preceding claims, **characterised in that** the data is characters.

6. A method as claimed in any one of the preceding claims, **characterised in that** the symbols (3, 24) of the symbol sequence consist of markings, the size of the markings defining the value of the symbol.

7. A method as claimed in claim 11 or 12, **characterised in that** each of the symbols (3, 24) of the symbol sequence comprises a raster point (28) and a marking (29), the value of each symbol being indicated by the position of said marking (29) in relation to the raster point (28).

8. A method as claimed in any one of the preceding claims, **characterised in that** the product (1) is a sheet of paper.

9. A method as claimed in any one of the preceding claims, **characterised in that** the coding pattern (2) codes text.

10. A method as claimed in any one of the preceding claims, **characterised in that** the coding pattern (2) codes a command.

11. A user unit for optical recording of information, which user unit comprises an image sensor (8) and which is adapted to optically record a coding pattern from a surface by means of the image sensor (8), said surface being provided with said coding pattern which comprises a series of subsequences (34, 35, 36, 39) of at least one symbol sequence (32) which has the characteristic that an arbitrary subsequence (34, 35, 36, 39) of a predetermined length of the symbol sequence (32) unambiguously defines the position of the subsequence (34, 35, 36, 39) in the symbol sequence (32), said user unit being further adapted to detect, in said recorded coding pattern, a predetermined number of subsequences (34, 35, 36, 39) from said series of subsequences, to calculate the difference between the positions in the symbol sequence (32) of each pair of two juxtaposed subsequences of said detected subsequences (34, 35, 36, 39) and to determine a data value (6) from each one of the calculated differences, **characterised in that** the user unit is further adapted to determine at least a part of a position value (30) from each one of the calculated differences, which position value (30) defines the position of said detected subsequences (34, 35, 36, 39) in the series of subsequences (32).

12. A user unit as claimed in claim 11, **characterised in that** the position information is a position subsequence of predetermined length of a position sequence which has the characteristic that an arbitrary position sequence of said predetermined length of the position sequence unambiguously defines the position of the position subsequence in the position sequence and **in that** the user unit is adapted to determine the position of the position subsequence in said position sequence.

13. A user unit as claimed in claim 11 or 12, **characterised in that** it also comprises a display, and that it is adapted to show data on the display.

14. A user unit as claimed in any one of claims 11-13, **characterised in that** it further comprises a loudspeaker, and that it is adapted to transmit, by means of the loudspeaker, sound corresponding to the data value.

15. A user unit as claimed in any one of claims 11-14, **characterised in that** it is adapted to detect the subsequences by detecting symbols in the recorded image.

16. A user unit as claimed in any one of claims 11-15, **characterised in that** it is adapted to use the position information to determine whether the data has been previously recorded.

## Patentansprüche

1. Verfahren zur Speicherung von nichtsequenziellen Daten, mit den folgenden Schritten: Codieren der Daten mittels einer Reihe von Teilsequenzen (34, 35, 36, 39) mindestens einer Symbolsequenz (32), welche die Eigenschaft aufweist, dass eine beliebige Teilsequenz (34, 35, 36, 39) einer vorbestimmten Länge der Symbolsequenz (32) die Position der Teilsequenz (34, 35, 36, 39) in der Symbolsequenz (32) unzweideutig definiert, und Wiedergeben eines Codierungsmusters (2) auf einem Produkt, wobei das Codierungsmuster die Reihe von Teilsequenzen (34, 35, 36, 39) umfasst, **dadurch gekennzeichnet, dass** das Codieren die folgenden Schritte umfasst: Umsetzen der zu codierenden Daten in mehrere Datenwerte (6), Addieren mindestens eines Teils eines Positionswerts (30) zu jedem Datenwert (6), um mehrere Datenpositionswerte (26) zu erhalten, Codieren jedes Datenpositionswerts (26) als die Differenz zwischen den Positionen in der Symbolsequenz (32) zweier nebeneinandergestellter Teilsequenzen in der Reihe von Teilsequenzen (34, 35, 36, 39), wobei die Positionswerte (30) die Reihenfolge der Teilsequenzen in der Reihe von Teilsequenzen (34, 35, 36, 39) definieren.

2. Verfahren nach Anspruch 1, **dadurch gekennzeichnet, dass** die Positionswerte eine Positionssequenz bilden, welche die Eigenschaft aufweist, dass eine beliebige Positions-Teilsequenz einer vorbestimmten Länge der Positionssequenz die Position der Positions-Teilsequenz in der Reihe von Teilsequenzen unzweideutig definiert.

3. Verfahren nach Anspruch 1 oder 2, **dadurch gekennzeichnet, dass** das Codierungsmuster eine Reihe von Teilen der Symbolsequenzen umfasst, die länger als die Teilsequenzen sind.

4. Verfahren nach einem der vorhergehenden Ansprüche, **dadurch gekennzeichnet, dass** das Codierunsgmuster als eine Matrix wiedergegeben wird, wobei die Teilsequenzen Spalten der Matrix darstellen.

5. Verfahren nach einem der vorhergehenden Ansprüche, **dadurch gekennzeichnet, dass** die Daten Zeichen sind.

6. Verfahren nach einem der vorhergehenden Ansprüche, **dadurch gekennzeichnet, dass** die Symbole (3, 24) der Symbolsequenz aus Markierungen bestehen, wobei die Größe der Markierungen den Wert des Symbols definiert.

7. Verfahren nach Anspruch 11 oder 12, **dadurch gekennzeichnet, dass** jedes der Symbole (3, 24) der Symbolsequenz einen Rasterpunkt (28) und eine Markierung (29) umfasst, wobei der Wert jedes Symbols durch die Position der Markierung (29) in Bezug auf den Rasterpunkt (28) angegeben wird.

8. Verfahren nach einem der vorhergehenden Ansprüche, **dadurch gekennzeichnet, dass** das Produkt (1) ein Blatt Papier ist.

9. Verfahren nach einem der vorhergehenden Ansprüche, **dadurch gekennzeichnet, dass** das Codierungsmuster (2) Text codiert.

10. Verfahren nach einem der vorhergehenden Ansprüche, **dadurch gekennzeichnet, dass** das Codierungsmuster (2) einen Befehl codiert.

11. Benutzereinheit zum optischen Aufzeichnen von Informationen, wobei die Benutzereinheit einen Bildsensor (8) umfasst und dafür ausgelegt ist, mittels des Bildsensors (8) optisch ein Codierungsmuster aus einer Oberfläche aufzuzeichnen, wobei die Oberfläche mit dem Codierungsmuster versehen ist, das eine Reihe von Teilsequenzen (34, 35, 36, 39) mindestens einer Symbolsequenz (32) umfasst, welche die Eigenschaft aufweist, dass eine beliebige Teilsequenz (34, 35, 36, 39) einer vorbestimmten Länge der Symbolsequenz (32) die Position der Teilsequenz (34, 35, 36, 39) in der Symbolsequenz (32) unzweideutig definiert, wobei die Benutzereinheit ferner dafür ausgelegt ist, in dem aufgezeichneten Codierungsmuster eine vorbestimmte Anzahl von Teilsequenzen (34, 35, 36, 39) aus der Reihe von Teilsequenzen zu detektieren, die Differenz zwischen den Positionen in der Symbolsequenz (32) jedes Paars zweier nebeneinandergestellter Teilsequenzen der detektierten Teilsequenzen (34, 35, 36, 39) zu berechnen und einen Datenwert (6) aus jeder der berechneten Differenzen zu bestimmen, **dadurch gekennzeichnet, dass** die Benutzereinheit ferner dafür ausgelegt ist, mindestens einen Teil eines Positionswerts (30) aus jeder der berechneten Differenzen zu bestimmen, wobei der Positionswert (30) die Position der detektierten Teilsequenzen (34, 35, 36, 39) in der Reihe von Teilsequenzen (32) definiert.

12. Benutzereinheit nach Anspruch 11, **dadurch gekennzeichnet, dass** die Positionsinformationen eine Positions-Teilsequenz einer vorbestimmten Länge einer Positionssequenz sind, welche die Eigenschaft aufweist, dass eine beliebige Positionssequenz der vorbestimmten Länge der Positionssequenz die Position der Positions-Teilsequenz in der Positionssequenz unzweideutig definiert, und dass die Benutzereinheit dafür ausgelegt ist, die Position der Positions-Teilsequenz in der Positionssequenz zu bestimmen.

13. Benutzereinheit nach Anspruch 11 oder 12, **dadurch gekennzeichnet, dass** sie außerdem ein Display umfasst, und dass sie dafür ausgelegt ist, Daten auf dem Display zu zeigen.

14. Benutzereinheit nach einem der Ansprüche 11-13, **dadurch gekennzeichnet, dass** sie ferner einen Lautsprecher umfasst, und dass sie dafür ausgelegt ist, mittels des Lautsprechers dem Datenwert entsprechenden Schall auszusenden.

15. Benutzereinheit nach einem der Ansprüche 11-14, **dadurch gekennzeichnet, dass** sie dafür ausgelegt ist, die Teilsequenzen durch Detektieren von Symbolen in dem aufgezeichneten Bild zu detektieren.

16. Benutzereinheit nach einem der Ansprüche 11-15, **dadurch gekennzeichnet, dass** sie dafür ausgelegt ist, mit den Positionsinformationen zu bestimmen, ob die Daten zuvor aufgezeichnet worden sind.

## Revendications

1. Procédé de stockage de données non séquentielles comprenant l'étape consistant à coder les données d'une série de sous séquences (34, 35, 36, 39) d'au moins une séquence (32) de symboles qui présente la caractéristique de ce qu'une sous séquence arbitraire (34, 35, 36, 39) d'une longueur prédéterminée de la séquence (32) de symboles définit sans ambiguïté la position de la sous séquence (34, 35, 36, 39) dans la séquence de symboles (32), et consistant à reproduire une suite de codages (2) sur un produit, suite de codages qui comprend ladite série de sous séquences (34, 35, 36, 39),
**caractérisé en ce que** le codage comprend les étapes consistant à convertir les données devant être codées en une pluralité de valeurs de données (6), à ajouter au moins une partie d'une valeur de position (30) à chaque valeur de donnée (6) afin d'obtenir une pluralité de valeurs de données - positions (26), à coder chaque valeur de donnée - position (26) comme étant la différence entre les positions dans la séquence de symboles (32) de deux sous séquences juxtaposées dans ladite série de sous séquences (34, 35, 36, 39), les valeurs des positions (30) définissant l'ordre desdites sous séquences dans lesdites séries de sous séquences (34, 35, 36, 39).

2. Procédé selon la revendication 1,
**caractérisé en ce que** les valeurs de positions forment une séquence de positions qui présentent la caractéristique de ce qu'une sous séquence arbitraire de positions constituée d'une longueur prédéterminée de la séquence de positions définit sans ambiguïté la position de la sous séquence de positions dans ladite série de sous séquences.

3. Procédé selon la revendication 1 ou 2,
**caractérisé en ce que** la suite de codages comprend une série de parties des séquences de symboles qui sont plus longues que lesdites sous séquences.

4. Procédé selon l'une quelconque des revendications précédentes, **caractérisé en ce que** ladite suite de codages est reproduite sous forme d'une matrice dans laquelle lesdites sous séquences constituent les colonnes de la matrice.

5. Procédé selon l'une quelconque des revendications précédentes, **caractérisé en ce que** les données sont des caractères.

6. Procédé selon l'une quelconque des revendications précédentes, **caractérisé en ce que** les symboles (3, 24) de la séquence de symboles consistent en des marquages, la taille des marquages définissant la valeur du symbole.

7. Procédé selon la revendication 11 ou 12,
**caractérisé en ce que** chacun des symboles (3, 24) de la séquence de symboles comprend un point de trame (28) et un marquage (29), la valeur de chaque symbole étant indiquée par la position dudit marquage (29) se rapportant au point de trame (28).

8. Procédé selon l'une quelconque des revendications précédentes, **caractérisé en ce que** le produit (1) est une feuille de papier.

9. Procédé selon l'une quelconque des revendications précédentes, **caractérisé en ce que** la suite de codages (2) code un texte.

10. Procédé selon l'une quelconque des revendications précédentes, **caractérisé en ce que** la suite de codages (2) code une instruction.

11. Unité utilisateur pour l'enregistrement optique d'informations, unité d'utilisateur qui comprend un capteur d'image (8) et qui est conçue pour enregistrer optiquement une suite de codages à partir d'une surface au moyen du capteur d'image (8), ladite surface étant dotée de ladite séquence de codages qui comprend une série de sous séquences (34, 35, 36, 39) d'au moins une séquence de symboles (32) qui présente la caractéristique de ce qu'une sous séquence arbitraire (34, 35, 36, 39) d'une longueur prédéterminée de la séquence de symboles (32) définit sans ambiguïté la position de la sous séquence (34, 35, 36, 39) dans la séquence de symboles (32), ladite unité utilisateur étant en outre conçue pour détecter, dans ladite suite de codages enregistrée, un nombre prédéterminé de sous séquences (34, 35, 36, 39) à partir de ladite série de sous séquences, afin de calculer la différence entre les positions de la séquence de symboles (32) de chaque paire de deux sous séquences juxtaposées faisant partie desdites sous séquences détectées (34, 35, 36, 39) et de déterminer une valeur de donnée (6) à partir de chacune des différences calculées, **caractérisée en ce que** l'unité utilisateur est en outre conçue pour déterminer au moins une partie d'une valeur de position (30) à partir de chacune des différences calculées, valeur de position (30) qui définit la position desdites sous séquences détectées (34, 35, 36, 39) dans la série de sous séquences (32).

12. Unité utilisateur selon la revendication 11, **caractérisée en ce que** les informations de positions représentent une sous séquence de positions d'une longueur prédéterminée d'une séquence de positions qui présentent la caractéristique de ce qu'une séquence de positions arbitraires de ladite longueur prédéterminée de la séquence de positions définit sans ambiguïté la position de la sous séquence de positions dans la séquence de positions, et **en ce que** l'unité utilisateur est conçue pour déterminer la position de la sous séquence de positions dans ladite séquence de positions.

13. Unité utilisateur selon la revendication 11 ou 12, **caractérisée en ce qu'**elle comprend également un afficheur et **en ce que** celle-ci est conçue pour représenter des données sur l'afficheur.

14. Unité utilisateur selon l'une quelconque des revendications 11 à 13, **caractérisée en ce qu'**elle comprend en outre un haut-parleur, et **en ce que** celle-ci est conçue pour transmettre, au moyen du haut-parleur, un son correspondant à la valeur des données.

15. Unité utilisateur selon l'une quelconque des revendications 11 à 14, **caractérisée en ce qu'**elle est conçue pour détecter les sous séquences en détectant des symboles dans l'image enregistrée.

16. Unité utilisateur selon l'une quelconque des revendications 11 à 15, **caractérisée en ce qu'**elle est conçue pour utiliser les informations de positions afin de déterminer si les données ont été précédemment enregistrées.
